(19) Europäisches Patentamt
European Patent Office
Office européen des brevets

(11) **EP 4 769 786 A1**

(12) **EUROPEAN PATENT APPLICATION**
published in accordance with Art. 153(4) EPC

(43) Date of publication:
01.07.2026 Bulletin 2026/27

(21) Application number: 25852445.3

(22) Date of filing: 06.08.2025

(51) International Patent Classification (IPC):
H01M 50/46 (2021.01)     H01M 50/446 (2021.01)
H01M 50/457 (2021.01)    H01M 50/491 (2021.01)
H01M 50/403 (2021.01)

(52) Cooperative Patent Classification (CPC):
H01M 50/403; H01M 50/446; H01M 50/457;
H01M 50/46; H01M 50/491; Y02E 60/10

(86) International application number:
PCT/KR2025/011849

(87) International publication number:
WO 2026/035040 (12.02.2026 Gazette 2026/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 06.08.2024 KR 20240104338

(71) Applicant: LG Energy Solution, Ltd.
Seoul 07335 (KR)

(72) Inventors:
• LEE, Yong-Hyeok
  Daejeon 34122 (KR)
• KIM, Ji-Yeon
  Daejeon 34122 (KR)
• KIM, Ji-Eun
  Daejeon 34122 (KR)

(74) Representative: Hoffmann Eitle
Patent- und Rechtsanwälte PartmbB
Arabellastraße 30
81925 München (DE)

(54) **LITHIUM SECONDARY BATTERY SEPARATOR, MANUFACTURING METHOD THEREOF, LITHIUM SECONDARY BATTERY COMPRISING SAME AND MANUFACTURING METHOD THEREOF**

(57) The present disclosure provides a separator for a lithium secondary battery, including a porous polymer substrate; at least one inorganic coating layer present on at least one surface of the porous polymer substrate, the inorganic coating layer including inorganic particles and a first particulate binder polymer; and at least one adhesive layer present on at least one surface of the inorganic coating layer, the adhesive layer including a second particulate binder polymer and a non-particulate binder precursor, wherein the non-particulate binder precursor includes an acrylic monomer or oligomer.

[FIGURE 1]

**Description**

TECHNICAL FIELD

The present disclosure relates to a separator for a lithium secondary battery and its manufacturing method, and a lithium secondary battery including the same and its manufacturing method.

This application is based on and claims priority from Korean Patent Application No. 10-2024-0104338 filed on August 6, 2024 in the Republic of Korea, the disclosure of which is incorporated herein by reference in its entirety.

BACKGROUND ART

Non-aqueous secondary batteries including lithium secondary batteries are widely used as power sources for portable electronic devices such as laptop computers, mobile phones, digital cameras or camcorders as well as electric vehicles.

In separators of lithium secondary batteries, the basic requirements include electrical separation and insulation of positive electrode from negative electrode and high ionic conductivity attributed to high permeability of ions, for example, lithium ions, based on high porosity. The separator does not participate in electrochemical reaction of the secondary battery, but it has significant influence on performance and safety of the secondary battery due to the physical properties such as electrolyte wetting, porosity or thermal shrinkage.

The separator using a porous polymer substrate shrinks at high temperature, causing an internal short circuit, and in the event of thermal runaway, when the polymer separator substrate melts, the risk of fire increases. Accordingly, to address the disadvantage of the porous polymer substrate, an inorganic coating layer may be added to one or two surfaces of the porous polymer substrate, and the inorganic coating layer may include inorganic particles and a binder polymer for overcoming the shortcomings of the porous polymer substrate.

Meanwhile, after electrolyte infilling, the binder polymer swells, and its physical properties degrade. Accordingly, the coating layer containing the binder polymer may decline in the function of suppressing the thermal shrinkage of the separator due to the low adhesion strength with respect to the porous polymer substrate, and the low adhesion strength with respect to the electrodes may result in folding of the separator or poor appearance of a manufactured cell.

DISCLOSURE

Technical Problem

The present disclosure is designed to address the above-described problems, and therefore the present disclosure is directed to providing a separator for a lithium secondary battery with good air permeability and resistance characteristics, stability in an electrolyte solution and high adhesion strength (wet adhesion strength) with respect to electrodes after electrolyte infilling.

The technical problems to be solved by the present disclosure are not limited thereto, and include another problem that will be clearly understood by those skilled in the art from the detailed description.

Technical Solution

To achieve the above-described objectives, according to an aspect of the present disclosure, provided are a separator for a lithium secondary battery and its manufacturing method, and a lithium secondary battery and its manufacturing method according to the following embodiments.

According to a first embodiment, provided is the separator for the lithium secondary battery including a porous polymer substrate; at least one inorganic coating layer present on at least one surface of the porous polymer substrate, the inorganic coating layer including inorganic particles and a first particulate binder polymer; and at least one adhesive layer present on at least one surface of the inorganic coating layer, the adhesive layer including a second particulate binder polymer and a non-particulate binder precursor, wherein the non-particulate binder precursor includes an acrylic monomer or oligomer.

According to a second embodiment, in the first embodiment, the non-particulate binder precursor may include a thermally polymerizable acrylic monomer, a thermally polymerizable acrylic oligomer, a photopolymerizable acrylic monomer, a photopolymerizable acrylic oligomer, or two or more thereof.

According to a third embodiment, in any one of the first and second embodiments, the non-particulate binder precursor may be polymerized in a temperature condition of 45°C to 85°C to form a non-particulate binder polymer.

According to a fourth embodiment, in any one of the first to third embodiments, the acrylic monomer or oligomer may be a monomer including at least one selected from butyl acrylate, β-carboxyethylacrylate, 2-ethylhexylacrylate, 2-methoxyethylacrylate, 4-hydroxybutylacrylate, ethylacrylate, 2-hydroxyethylacrylate, 2-hydroxypropyl acrylate, pentylmethacrylate, 2-hydroxymethylacrylate, ethylmethacrylate, methylmethacrylate, acrylic acid and acrylonitrile, or be an oligomer including at least one repeating unit derived therefrom.

According to a fifth embodiment, in any one of the first to fourth embodiments, a weight ratio of the second particulate binder polymer to the non-particulate binder precursor may be 90:10 to 10:90.

According to a sixth embodiment, in any one of the first to fifth embodiments, at least a portion of the second particulate binder polymer may be connected by the non-particulate binder precursor.

According to a seventh embodiment, in any one of the first to sixth embodiments, a weight ratio of the first particulate binder polymer to the second particulate binder polymer may be 90:10 to 10:90.

According to an eighth embodiment, provided is the method for manufacturing the separator for the lithium secondary battery, the method including preparing a first slurry composition including inorganic particles, a first particulate binder polymer and a first solvent, and a second slurry composition including a second particulate binder polymer, a non-particulate binder precursor and a second solvent; applying the first slurry composition to at least one surface of a porous polymer substrate, followed by first drying, to form an inorganic coating layer; applying the second slurry composition to the inorganic coating layer, followed by second drying, to form an adhesive layer; and polymerizing the non-particulate binder precursor into a non-particulate binder polymer.

According to a ninth embodiment, in the eighth embodiment, the polymerization may be performed at a temperature of 45°C to 85°C.

According to a tenth embodiment, in any one of the eighth and ninth embodiments, the second drying to form the adhesive layer may be performed at a lower temperature than a temperature at which the non-particulate binder precursor is polymerized into the non-particulate binder polymer.

According to an eleventh embodiment, provided is the lithium secondary battery including a positive electrode; a negative electrode; an electrolyte solution; and a separator positioned between the positive electrode and the negative electrode; wherein the separator includes a porous polymer substrate; at least one inorganic coating layer present on at least one surface of the porous polymer substrate, the inorganic coating layer including inorganic particles and a first particulate binder polymer; and at least one adhesive layer present on at least one surface of the inorganic coating layer, the adhesive layer including a second particulate binder polymer and a non-particulate binder polymer, wherein the non-particulate binder polymer is formed by polymerization of a non-particulate binder precursor including an acrylic monomer or oligomer.

According to a twelfth embodiment, in the eleventh embodiment, an adhesion strength (a wet adhesion strength) of the separator with respect to the electrodes after injection of the electrolyte solution may be 7 gf/20 mm or more.

According to a thirteenth embodiment, in any one of the eleventh and twelfth embodiments, a solubility of the non-particulate binder polymer may be 20% or less, the solubility calculated by the following Equation 1:

$$\text{Solubility (\%)} = \{(\text{Measured weight before immersion} - \text{Measured weight after immersion}) / (\text{Measured weight before immersion})\} \times 100 \qquad \text{Equation 1}$$

According to a fourteenth embodiment, in any one of the eleventh to thirteenth embodiments, a swelling ratio of the non-particulate binder polymer may be in a range of 50% to 500%, the swelling ratio calculated by the following Equation 2:

$$\text{Swelling ratio (\%)} = \{(\text{Measured weight after immersion} - \text{Measured weight before immersion}) / (\text{Measured weight before immersion})\} \times 100 \qquad \text{Equation 2}$$

According to a fifteenth embodiment, in any one of the eleventh to fourteenth embodiments, an air permeability of the separator may be in a range of 40 sec/100cc to 80 sec/100cc.

According to a sixteenth embodiment, provided is the method for manufacturing the lithium secondary battery including a first electrode; a second electrode; an electrolyte solution; and a separator positioned between the first electrode and the second electrode, the method including stacking the first electrode, the separator and the second electrode in a sequential order to make a stack; laminating the stack at a temperature of 45°C to 85°C for 1 to 120 seconds to make an electrode assembly; and injecting the electrolyte solution into the electrode assembly, wherein the separator includes a porous polymer substrate; at least one inorganic coating layer present on at least one surface of the porous polymer substrate, the inorganic coating layer including inorganic particles and a first particulate binder polymer; and at least one adhesive layer present on at least one surface of the inorganic coating layer, the adhesive layer including a second particulate binder polymer and a non-particulate binder polymer, wherein the non-particulate binder polymer is formed by polymerization of a non-particulate binder precursor including an acrylic monomer or oligomer.

Advantageous Effects

The separator for the lithium secondary battery according to an embodiment of the present disclosure may have good air permeability and resistance characteristics, stability in an electrolyte solution and high adhesion strength (wet adhesion strength) with respect to electrodes after electrolyte infilling.

The effects that can be obtained through the present disclosure are not limited thereto, and these and other technical effects will be clearly understood by those skilled in the art from the following description.

BRIEF DESCRIPTION OF THE DRAWING

The accompanying drawing illustrates an embodiment of the present disclosure and together with the above description, serves to provide a better understanding of the technical aspects of the present disclosure, and thus the present disclosure should not be construed as being limited to the drawing.

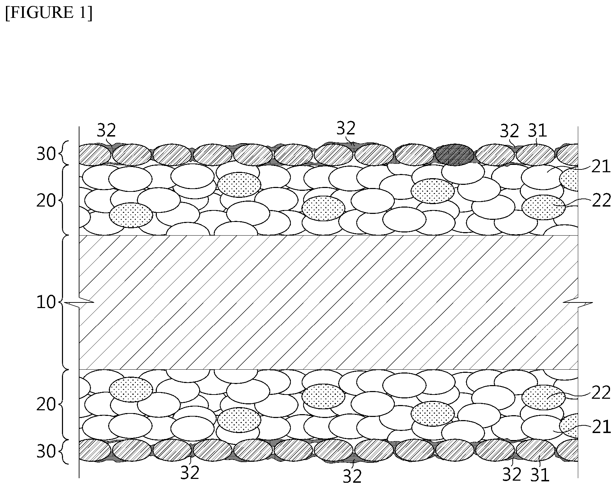

FIG. 1 shows schematically the structure of a separator according to an embodiment of the present disclosure.

BEST MODE

The terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

The terms as used herein are used to describe embodiments of the present disclosure but not intended to be limiting. The singular forms include the plural forms unless the context clearly indicates otherwise.

Definition

The terms "comprise", "include" and "have" when used in this specification, specify the presence of the stated elements, but do not preclude the presence or addition of one or more other elements unless the context clearly indicates otherwise.

The glass transition temperature (Tg) may be, for example, a value measured by a dynamic mechanical analyzer (DMA) or a differential scanning calorimeter (DSC) (TA Instrument). For example, the glass transition temperature may indicate a value measured according to the DMA method specified in ASTM D4065.

In this specification, $D_{50}$ refers to a particle size at 50% point of cumulative particle size distribution. Furthermore, $D_{10}$ refers to a particle size at 10% point of cumulative particle size distribution, and $D_{90}$ refers to a particle size at 90% point of cumulative particle size distribution.

The particle size may be measured using a laser diffraction method. Specifically, the particle size distribution is calculated by dispersing a powder to be measured in a dispersion medium, feeding it into a commercially available laser diffraction particle size measuring instrument (for example, Microtrac S3500) and measuring a difference in diffraction pattern as a function of particle size when particles pass through a laser beam. $D_{10}$, $D_{50}$ and $D_{90}$ may be measured by calculating particle diameters at 10% point, 50% point and 90% point of cumulative particle size distribution in the measuring instrument, respectively.

Separator for lithium secondary battery

The present disclosure provides a separator for a lithium secondary battery.

According to an aspect of the present disclosure, the separator for the lithium secondary battery of the present disclosure includes a porous polymer substrate; at least one inorganic coating layer present on at least one surface of the porous polymer substrate, the inorganic coating layer including inorganic particles and a first particulate binder polymer; and at least one adhesive layer present on at least one surface of the inorganic coating layer, the adhesive layer including a second particulate binder polymer and a non-particulate binder precursor, wherein the non-particulate binder precursor includes an acrylic monomer or oligomer.

Specifically, as can be seen from FIG. 1, the separator for the lithium secondary battery of the present disclosure includes the porous polymer substrate 10; the inorganic coating layer 20 present on at least one surface of the porous polymer substrate 10; and the adhesive layer 30 present on at least one surface of the inorganic coating layer 20, wherein the inorganic coating layer 20 includes the inorganic particles 21 and the first particulate binder polymer 22, and the adhesive layer 30 includes the second particulate binder polymer 31 and the non-particulate binder precursor 32.

Porous polymer substrate

In an embodiment of the present disclosure, the porous polymer substrate refers to a substrate having a plurality of pores inside to act as a porous ion-conducting barrier that allows ions to pass while preventing an electrical contact between a negative electrode and a positive electrode. The pores are connected to each other, allowing gases or liquids to pass from one side of the substrate to the other.

The material of the porous polymer substrate may include any organic or inorganic material having electrical insulation properties. In particular, from the perspective of imparting a shutdown function to the porous polymer substrate, the material of the porous polymer substrate may preferably include thermoplastic resin. Here, the shutdown function refers to functionality of the thermoplastic resin that melts and closes the pores of the porous substrate to stop ion migration in order to prevent thermal runaway of the battery when the temperature of the battery increases. The thermoplastic resin may include thermoplastic resins having the melting point of less than 200°C, and preferably, especially polyolefin.

In addition, the porous polymer substrate may further include at least one polymer resin of polyethylene terephthalate, polybutylene terephthalate, polyacetal, polyamide, polycarbonate, polyimide, polyetheretherketone, polyethersulfone, polyphenylene oxide, polyphenylene sulfide or polyethylene naphthalene. The porous polymer substrate may include a nonwoven fabric, a porous polymer film or a laminate of two or more thereof, but is not particularly limited thereto.

In the present disclosure, the thickness of the porous polymer substrate is preferably 3 $\mu$m to 12 $\mu$m or 5 $\mu$m to 10 $\mu$m. When the thickness of the porous polymer substrate is below the aforementioned range, the function as the conducting barrier is insufficient, and in contrast, when the thickness of the porous polymer substrate is much higher than the aforementioned range (or when the porous polymer substrate is too thick), the resistance of the separator may increase too much.

In an embodiment of the present disclosure, the weight average molecular weight of the polyolefin may be 100,000 to 5,000,000. When the weight average molecular weight is smaller than 100,000, it may be difficult to ensure sufficient mechanical properties. In addition, when the weight average molecular weight is larger than 5,000,000, the shutdown characteristics may not work properly or forming may become difficult. In addition, the puncture strength of the porous polymer substrate may be 300 gf or more to improve the production yield. The puncture strength of the porous substrate refers to the maximum puncture load (gf) measured by a puncture test in the conditions of a needle tip curvature radius of 0.5 mm and a puncture speed of 4 mm/sec using a Kato tech KES-G5 handy compression tester.

In a certain embodiment of the present disclosure, the porous polymer substrate may include any planar porous polymer substrate used in electrochemical devices, and for example, may include an insulating thin film having high ion permeability and mechanical strength, pore diameter of generally 10 nm to 200 nm and thickness of generally 5 $\mu$m to 12 $\mu$m.

Inorganic coating layer

In an embodiment of the present disclosure, the inorganic coating layer is present on at least one surface of the porous polymer substrate and includes the inorganic particles and the first particulate binder polymer. The thickness of the inorganic coating layer may be in a range of 0.5 $\mu$m to 2 $\mu$m, 0.6 $\mu$m to 1.8 $\mu$m, or 0.7 $\mu$m to 1.5 $\mu$m.

Inorganic particle

The inorganic particle is not limited to a particular one and may include any electrochemically stable one. That is, the inorganic particles that may be used in the present disclosure are not limited to a particular type and may include any type of inorganic particles in which oxidation and/or reduction reaction does not occur in the operating voltage range (for example, 0 to 5 V vs Li/Li+) of the electrochemical device applied. In particular, when inorganic particles having high dielectric constant are used as the inorganic particles, it may contribute to the increased degree of dissociation of an electrolyte salt, for example, a lithium salt, in the liquid electrolyte, thereby improving ionic conductivity of the electrolyte solution.

By the above-described reasons, the inorganic particles preferably include high-dielectric constant inorganic particles having the dielectric constant of 5 or more, and preferably 10 or more. Non-limiting examples of the inorganic particles having the dielectric constant of 5 or more include $BaTiO_3$, $Pb(Zr,Ti)O_3$ (PZT), $Pb_{1-x}La_xZr_{1-y}Ti_yO_3$ (PLZT, 0<x<1, 0<y<1), $Pb(Mg_{1/3}Nb_{2/3})O_3$-$PbTiO_3$ (PMN-PT), hafnia ($HfO_2$), $SrTiO_3$, $SnO_2$, $CeO_2$, MgO, NiO, CaO, ZnO, $ZrO_2$, $SiO_2$, $Y_2O_3$, $Al_2O_3$, SiC, $TiO_2$, or a mixture thereof.

In addition, the inorganic particles may include inorganic particles having the ability to transport lithium ions, i.e., inorganic particles that contain lithium but do not store lithium and have the function of moving lithium ions. Non-limiting examples of the inorganic particles having the ability to transport lithium ions include lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y$

$<1, 0 < z < 3$), (LiAlTiP)$_x$O$_y$-based glass ($0 < x < 4$ , $0 < y < 13$) such as 14Li$_2$O-9Al$_2$O$_3$-38TiO$_2$-39P$_2$O$_5$, lithium lanthanum titanate (Li$_x$La$_y$TiO$_3$, $0 < x < 2$ , $0 < y < 3$), lithium germanium thiophosphate (Li$_x$Ge$_y$P$_z$S$_w$, $0 < x < 4$, $0 < y < 1$, $0 < z < 1$, $0 < w < 5$) such as Li$_{3.25}$Ge$_{0.25}$P$_{0.75}$S$_4$, lithium nitride (Li$_x$N$_y$, $0 < x < 4$, $0 < y < 2$) such as Li$_3$N, SiS$_2$-based glass (Li$_x$Si$_y$S$_z$, $0 < x < 3$, $0 < y < 2$, $0 < z < 4$) such as Li$_3$PO$_4$-Li$_2$S-SiS$_2$, P$_2$S$_5$-based glass (Li$_x$P$_y$S$_z$, $0 < x < 3$, $0 < y < 3$, $0 < z < 7$) such as LiI-Li$_2$S-P$_2$S$_5$, or a mixture thereof.

In addition, the average particle size of the inorganic particles is not limited to a particular range, but is preferably 0.1 μm to 2.0 μm, 0.2 μm to 1.8 μm, or 0.4 μm to 1 μm in order to form the coating layer with even thickness and optimal porosity. When the average particle size of the inorganic particles is below the lower limit, dispersion may be reduced, and when the average particle size of the inorganic particles is above the upper limit, the inorganic coating layer may be formed with a larger thickness.

In an embodiment of the present disclosure, the inorganic particles may be included in an amount ranging from 10 wt% to 90 wt% based on 100 wt% of the inorganic coating layer.

First particulate binder polymer

In an embodiment of the present disclosure, the first particulate binder polymer may have a property of maintaining its original particle shape without a change in shape when it is dispersed in solvents. Specifically, the first particulate binder polymer may exist in a particulate state within aqueous solvents. Specifically, the first particulate binder polymer may be dispersed in a particulate phase within aqueous solvents due to low solubility in aqueous solvents. The aspect ratio of the first particulate binder polymer in aqueous solvents may range from 1.0 to 1.5, from 1.0 to 1.3, or from 1.0 to 1.2. In this instance, the aspect ratio is defined as a ratio of the length of the major axis to the minor axis of the first particulate binder, and as the aspect ratio is closer to 1, the shape may be closer to a sphere. The aspect ratio may be, for example, calculated using a particle shape analyzer (QICPIC-LIXELL, Sympatec GmbH).

In an embodiment of the present disclosure, the first particulate binder polymer may include a first acrylic particulate binder polymer, a first fluorine-based particulate binder polymer, or a combination thereof.

In an embodiment of the present disclosure, the first acrylic particulate binder polymer may include, for example, an acrylic homopolymer, i.e., a polymer composed of a single acrylic monomer, or a copolymer of a repeating unit derived from an acrylic monomer and another repeating unit. For example, the first acrylic particulate binder polymer may include poly(methylmethacrylate), poly(ethylhexylacrylate), poly(butylacrylate), poly(acrylonitrile), a copolymer of ethylhexylacrylate and methylmethacrylate, a copolymer of butylacrylate and methylmethacrylate, an ethylacrylate-acrylic acid-N,N-dimethylacrylamide copolymer, an ethylacrylate-acrylic acid-2-(dimethylamino)ethylacrylate copolymer, an ethylacrylate-acrylic acid-N,N-diethylacrylamide copolymer, an ethyl acrylate-acrylic acid-2-(diethylamino)ethyl acrylate copolymer, or a mixture of two or more thereof.

In an embodiment of the present disclosure, the first fluorine-based particulate binder polymer may include, for example, a polyvinylidene fluoride (PVDF) homopolymer, and a copolymer of a repeating unit derived from vinylidene fluoride and another repeating unit. For example, the first fluorine-based particulate binder polymer may include a copolymer of a repeating unit derived from vinylidene fluoride and at least one selected from a repeating unit derived from trifluoroethylene (TrFE), a repeating unit derived from tetrafluoroethylene (TFE), a repeating unit derived from hexafluoropropylene (HFP), a repeating unit derived from trichloroethylene (TrCE), a repeating unit derived from trichlorofluoroethylene (TCFE), a repeating unit derived from chlorotrifluoroethylene (CTFE), a repeating unit derived from polymethylmethacrylate (PMMA) and a repeating unit derived from polyvinylacetate (PVAc), or a mixture of two or more thereof.

In an embodiment of the present disclosure, the glass transition temperature (Tg) of the first particulate binder polymer may be 30°C to 80°C, or 40°C to 70°C. When the first particulate binder polymer has the aforementioned glass transition temperature, the binder may lose the shape of particles at the time of manufacturing the separator and form a film under predetermined temperature and pressure conditions.

In an embodiment of the present disclosure, the D$_{50}$ of the first particulate binder polymer may be 150 nm to 1 μm, or 200 nm to 800 nm. When the size of the first particulate binder polymer falls within the aforementioned range, adhesion strength and porosity of the separator may be improved.

In an embodiment of the present disclosure, the first particulate binder polymer may be included in an amount ranging from 10 wt% to 90 wt% based on 100 wt% of the inorganic coating layer. When the amount of the first particulate binder polymer falls within the aforementioned range, bonds between the inorganic particles may be improved and heat resistance of the separator may be improved.

In an embodiment of the present disclosure, the first particulate binder polymer may have, for example, a single-phase particle structure or a multi-phase particle structure such as core-shell, core-first shell-second shell.

In an embodiment of the present disclosure, the first particulate binder polymer may have, for example, a spherical, elliptical or oval, platy, or irregular particle shape.

Adhesive layer

In an embodiment of the present disclosure, the adhesive layer is present on at least one surface of the inorganic coating layer, and includes the second particulate binder polymer and the non-particulate binder precursor. The thickness of the adhesive layer may be in a range of 0.3 $\mu$m to 1 $\mu$m. In this instance, the non-particulate binder precursor may be polymerized into a non-particulate binder polymer in the subsequent process.

When the non-particulate binder precursor is included as a binder in the adhesive layer, compared to direct inclusion of the non-particulate binder polymer, lower molecular weight may lead to higher dispersion within the dispersion medium and less agglomeration, and the adhesive layer may be evenly formed. Furthermore, it may be possible to prevent the clogged pores within the adhesive layer, resulting in higher porosity, thereby improving resistance characteristics. Furthermore, the particulate binder may make surface contact, leading to a lower swelling ratio, thereby further improving the properties of the separator.

Second particulate binder polymer

In an embodiment of the present disclosure, the second particulate binder polymer may have a property of maintaining its original particle shape without a change in shape when it is dispersed in solvents. Specifically, the second particulate binder polymer may exist in a particulate state within aqueous solvents. Specifically, the second particulate binder polymer may be dispersed in a particulate phase within aqueous solvents due to low solubility in aqueous solvents. The aspect ratio of the second particulate binder polymer in aqueous solvents may range from 1.0 to 1.5, from 1.0 to 1.3, or from 1.0 to 1.2. In this instance, the aspect ratio is defined as a ratio of the length of the major axis to the minor axis of the second particulate binder, and as the aspect ratio is closer to 1, the shape may be closer to a sphere. The aspect ratio may be, for example, calculated using a particle shape analyzer (QICPIC-LIXELL, Sympatec GmbH).

In an embodiment of the present disclosure, the second particulate binder polymer may include a second acrylic particulate binder polymer, a second fluorine-based particulate binder polymer, or a combination thereof.

In an embodiment of the present disclosure, the second acrylic particulate binder polymer may include, for example, an acrylic homopolymer, i.e., a polymer composed of a single acrylic monomer, or a copolymer of a repeating unit derived from an acrylic monomer and a repeating unit derived from another monomer. For example, the second acrylic particulate binder polymer may include poly(methylmethacrylate), poly(ethylhexylacrylate), poly(butylacrylate), poly(acrylonitrile), a copolymer of ethylhexylacrylate and methylmethacrylate, a copolymer of butylacrylate and methylmethacrylate, an ethylacrylate-acrylic acid-N,N-dimethylacrylamide copolymer, an ethylacrylate-acrylic acid-2-(dimethylamino) ethylacrylate copolymer, an ethylacrylate-acrylic acid-N,N-diethylacrylamide copolymer, an ethyl acrylate-acrylic acid-2-(diethylamino)ethyl acrylate copolymer, or a mixture of two or more thereof.

In an embodiment of the present disclosure, the second fluorine-based particulate binder polymer may include, for example, a polyvinylidene fluoride (PVDF) homopolymer, and may include a copolymer of a repeating unit derived from vinylidene fluoride and another repeating unit. For example, the second fluorine-based particulate binder polymer may include a copolymer of a repeating unit derived from vinylidene fluoride and at least one selected from a repeating unit derived from trifluoroethylene (TrFE), a repeating unit derived from tetrafluoroethylene (TFE), a repeating unit derived from hexafluoropropylene (HFP), a repeating unit derived from trichloroethylene (TrCE), a repeating unit derived from trichlorofluoroethylene (TCFE), a repeating unit derived from chlorotrifluoroethylene (CTFE), a repeating unit derived from polymethylmethacrylate (PMMA), and a repeating unit derived from polyvinylacetate (PVAc), or a mixture of two or more thereof.

In an embodiment of the present disclosure, the glass transition temperature (Tg) of the second particulate binder polymer may be 30°C to 80°C, or 40°C to 70°C. When the second particulate binder polymer has the aforementioned glass transition temperature, the binder may lose the shape of particles at the time of manufacturing the separator and form a film under predetermined temperature and pressure conditions.

In an embodiment of the present disclosure, the $D_{50}$ of the second particulate binder polymer may be 150 nm to 1 $\mu$m or 200 nm to 800 nm. When the size of the second particulate binder polymer falls within the aforementioned range, adhesion strength and porosity of the separator may be improved.

In an embodiment of the present disclosure, the second particulate binder polymer may be included in an amount ranging from 10 wt% to 90 wt% based on 100 wt% of the adhesive layer. When the amount of the second particulate binder polymer falls within the aforementioned range, the adhesion strength after electrolyte infilling (wet adhesion strength) may be improved and this may be a beneficial effect on preserving the shape of the adhesive layer including the non-particulate binder polymer.

In an embodiment of the present disclosure, the second particulate binder polymer may have, for example, a single-phase particle structure or a multi-phase particle structure such as core-shell, core-first shell-second shell.

In an embodiment of the present disclosure, the second particulate binder polymer may have, for example, a spherical, elliptical or oval, platy, or irregular particle shape.

In an embodiment of the present disclosure, a weight ratio of the first particulate binder polymer to the second particulate binder polymer may be 90:10 to 10:90.

Non-particulate binder polymer

In an embodiment of the present disclosure, the non-particulate binder precursor includes the acrylic monomer or oligomer. The acrylic monomer or oligomer may refer to an acrylic monomer or an acrylic oligomer.

In an embodiment of the present disclosure, the non-particulate binder precursor may include a thermally polymerizable acrylic monomer, a thermally polymerizable acrylic oligomer, a photopolymerizable acrylic monomer, a photopolymerizable acrylic oligomer, or two or more thereof. The thermally polymerizable acrylic monomer or the thermally polymerizable acrylic oligomer may be polymerized by heat at or above a predetermined temperature to form a thermally polymerizable acrylic polymer. The photopolymerizable acrylic monomer or the photopolymerizable acrylic oligomer may be polymerized by ultraviolet (UV) light to form a photopolymerizable acrylic polymer.

In an embodiment of the present disclosure, the acrylic monomer may be a compound having 2 to 16 carbon atoms, or 2 to 14 carbon atoms, or 2 to 12 carbon atoms. When the carbon number of the acrylic monomer falls within the aforementioned range, the monomer may have improved adhesive properties.

In an embodiment of the present disclosure, the acrylic oligomer may be a low-molecular weight polymer formed by polymerization of two or more acrylic monomers, and may include a compound containing a reactive functional group at the terminal of the molecule. The acrylic oligomer may, for example, have a repeating unit formed by polymerization of 2 to 20, 3 to 15, or 4 to 10 monomers.

In an embodiment of the present disclosure, the acrylic monomer or oligomer may include an oligomer including at least one monomer selected from butyl acrylate, β-carboxyethylacrylate, 2-ethylhexylacrylate, 2-methoxyethylacrylate, 4-hydroxybutylacrylate, ethylacrylate, 2-hydroxyethylacrylate, 2-hydroxypropyl acrylate, pentylmethacrylate, 2-hydroxymethylacrylate, ethylmethacrylate, methylmethacrylate, acrylic acid and acrylonitrile. In an embodiment of the present disclosure, the acrylic monomer may include a mixture including at least one of the above-listed monomers. In an embodiment of the present disclosure, the acrylic oligomer may include an oligomer including at least one repeating unit derived from the above-listed monomers, and the acrylic oligomer may include a mixture including at least one of these oligomers. Alternatively, the acrylic monomer or oligomer may include a mixture including the acrylic monomer and the acrylic oligomer.

In an embodiment of the present disclosure, the non-particulate binder precursor may form the non-particulate binder polymer when it is polymerized in temperature conditions of 45°C to 85°C, 50°C to 80°C or 55°C to 75°C. Preferably, the non-particulate binder precursor may form the non-particulate binder polymer when it is polymerized in temperature conditions of 45°C to 85°C. The temperature at which the non-particulate binder polymer is polymerized by heat may be different depending on the structure of the precursor (monomer), and the starting temperature for the polymerization of the non-particulate binder precursor may be adjusted by changing the type of the non-particulate binder precursor. When the non-particulate binder precursor meets the aforementioned temperature range, the non-particulate binder precursor is polymerized at higher temperatures than room temperature, and in the common natural drying step, the non-particulate binder precursor is not polymerized, so the start of the polymerization may be controlled. Additionally, because high temperature is not required for the polymerization of the non-particulate binder precursor, the properties of the porous polymer substrate may not degrade.

In an embodiment of the present disclosure, the non-particulate binder polymer may include a homopolymer including one type of acrylic monomer or oligomer, a copolymer of two or more types of acrylic monomers or oligomers, or a blend thereof. When the non-particulate binder polymer is a copolymer, the copolymer may include a block copolymer, a graft copolymer, a branched copolymer, an alternating copolymer or a random copolymer. The number average molecular weight (Mn), the weight average molecular weight (Mw) and the glass transition temperature (Tg) of the non-particulate binder polymer may be controlled by controlling the type of the acrylic monomer or oligomer and the number of repeating units.

In an embodiment of the present disclosure, at least a portion of the second particulate binder polymer may be connected by the non-particulate binder polymer and/or the non-particulate binder precursor. As described below, during second drying, a solvent may evaporate in the presence of the non-particulate binder precursor between the second particulate binder polymers, and subsequently, the non-particulate binder precursor may be polymerized into the non-particulate binder polymer. In this instance, the non-particulate binder polymer may make surface contact with the second particulate binder polymer, and establish a connection between the second particulate binder polymers.

In an embodiment of the present disclosure, the thermally polymerizable acrylic monomer or oligomer may form the non-particulate binder polymer by thermal polymerization in the presence of a thermal polymerization initiator. The thermal polymerization initiator may be added together with the acrylic monomer or oligomer included in the monomer or oligomer mixture and a molecular weight regulator. Alternatively, the monomer or oligomer mixture may be fed into a reactor, then the reaction temperature may be set to the aforementioned temperature, and an appropriate amount of thermal polymerization initiator may be added at the start time of reaction. That is, the thermal polymerization reaction may proceed with an addition of the thermal polymerization initiator.

The thermal polymerization initiator may include, for example, at least one of an azo-based initiator such as azobismetapropionate, 2,2'-azobis(4-methoxy-2,4-dimethylvaleronitrile), 2,2-azobis-2,4-dimethylvaleronitrile, 2,2-azobisisobutyronitrile, dimethyl 2,2'-azobis(2-methylpropionate) or 2,2-azobis-2-methylbutyronitrile; a peroxyester compound such as dipropyl peroxydicarbonate, diisopropyl peroxydicarbonate, bis-4-butylcyclohexyl peroxydicarbonate, diethoxyethyl peroxydicarbonate, diethoxyhexyl peroxydicarbonate, ethylhexyl peroxydicarbonate, hexyl peroxydicarbonate, dimethoxybutyl peroxydicarbonate, bis(3-methoxy-3-methoxybutyl)peroxydicarbonate, hexyl peroxy pivalate, amyl peroxy pivalate, butyl peroxy pivalate or trimethylhexanoyl peroxide; a peroxy dicarbonate compound such as dimethyl hydroxybutyl peroxaneodecanoate, amyl peroxy neodecanoate or butyl peroxy neodecanoate; acyl peroxide such as 3,5,5-trimethylhexanoyl peroxide, lauryl peroxide or dibenzoyl peroxide; ketone peroxide; dialkyl peroxide; peroxy ketal; or a peroxide initiator such as hydroperoxide.

In an embodiment of the present disclosure, the photopolymerizable acrylic monomer or oligomer may form the non-particulate binder polymer by polymerization of the photopolymerizable acrylic monomer or oligomer in the presence of a predetermined initiator. The initiator may include ethylhexyl peroxydicarbonate, an azobis(2-methylpropionate)-based compound such as dimethyl 2,2'-azobis(2-methylpropionate), or a combination thereof.

In an embodiment of the present disclosure, the photopolymerizable acrylic monomer or oligomer may form the non-particulate binder polymer by photopolymerization in the presence of a photopolymerization initiator. The photopolymerization initiator may be added together with the acrylic monomer included in the monomer mixture and the molecular weight regulator. Alternatively, the monomer mixture may be fed into the reactor, followed by irradiation for polymerization, and an appropriate amount of photopolymerization initiator may be added at the start time of reaction. That is, the photopolymerization reaction may proceed with an addition of the photopolymerization initiator.

The photopolymerization initiator may include, for example, a benzoin-based photopolymerization initiator, a hydroxy ketone-based photopolymerization initiator, an amino ketone-based photopolymerization initiator or a phosphine oxide-based photopolymerization initiator, and specifically, may include benzoin, benzoin methyl ether, benzoin ethyl ether, benzoin isopropyl ether, benzoin n-butyl ether, benzoin isobutyl ether, acetophenone, dimethylanino acetophenone, 2,2-dimethoxy-2-phenylacetophenone, 2,2-diethoxy-2-phenylacetophenone, 2-hydroxy-2-methyl-1-phenylpropan-1-one, 1-hydroxycyclohexylphenyl ketone, 2-methyl-1-[4-(methylthio)phenyl]-2-morpholino-propan-1-one, 4-(2-hydroxyethoxy)phenyl-2-(hydroxy-2-propyl)ketone, benzophenone, p-phenylbenzophenone, 4,4'-diethylaminobenzophenone, dichlorobenzophenone, 2-methylanthraquinone, 2-ethylanthraquinone, 2-t-butylanthraquinone, 2-aminoanthraquinone, 2-methylthioxanthone, 2-ethylthioxanthone, 2-chlorothioxanthone, 2,4-dimethylthioxanthone, 2,4-diethylthioxanthone, benzyldimethylketal, acetophenone dimethylketal, p-dimethylamino benzoic acid ester, oligo[2-hydroxy-2-methyl-1-[4-(1-methylvinyl)phenyl]propanone] and 2,4,6-trimethylbenzoyl-diphenyl-phosphineoxide, but is not limited thereto.

Method for manufacturing separator for lithium secondary battery

The present disclosure provides a method for manufacturing a separator for a lithium secondary battery.

According to an aspect of the present disclosure, the method for manufacturing the separator for the lithium secondary battery of the present disclosure includes preparing a first slurry composition including the inorganic particles, the first particulate binder polymer and a first solvent, and a second slurry composition including the second particulate binder polymer, the non-particulate binder precursor and a second solvent; applying the first slurry composition to at least one surface of the porous polymer substrate, followed by first drying, to form the inorganic coating layer; and applying the second slurry composition to the inorganic coating layer, followed by second drying, to form the adhesive layer; and polymerizing the non-particulate binder precursor into the non-particulate binder polymer.

Hereinafter, each step of the method for manufacturing the separator for the lithium secondary battery will be described in detail.

First, the first slurry composition including the inorganic particles, the first particulate binder polymer and the first solvent and the second slurry composition including the second particulate binder polymer, the non-particulate binder precursor and the second solvent are prepared.

For details of the inorganic particles, the first particulate binder polymer, the second particulate binder polymer and the non-particulate binder precursor, referred is made to the above description.

In an embodiment of the present disclosure, the first solvent and the second solvent may each be an aqueous solvent or an organic solvent, and preferably an aqueous solvent.

In an embodiment of the present disclosure, the aqueous solvent may include water. Furthermore, when there are limits to drying speed and temperature, methanol, ethanol or isopropyl alcohol having lower boiling point than water may be used as a co-solvent.

In an embodiment of the present disclosure, the organic solvent may include, for example, cyclic aliphatic hydrocarbons such as cyclopentane or cyclohexane; aromatic hydrocarbons such as toluene, xylene or ethylbenzene; ketones such as acetone, ethyl methyl ketone, diisopropyl ketone, cyclohexanone, methylcyclohexane or ethylcyclohexane; chlorinated aliphatic hydrocarbons such as methylene chloride, chloroform or carbon tetrachloride; esters such as ethyl acetate, butyl acetate, γ-butyrolactone or ε-caprolactone; acylonitrile such as acetonitrile or propionitrile; ethers such as tetrahydrofuran or ethylene glycol diethyl ether; alcohols such as methanol, ethanol, isopropanol, ethylene glycol or ethylene glycol monomethyl ether; or amides such as N-methylpyrrolidone or N,N-dimethylformamide, and the solvent may include acetone in view of advantages in the drying process.

In an embodiment of the present disclosure, a weight ratio of the inorganic particles to the first particulate binder polymer in the first slurry composition may be 1:99 to 99:1, 10:90 to 90:10, or 20:80 to 80:20. When the weight ratio of the inorganic particles to the first particulate binder polymer falls within the aforementioned range, heat resistance of the separator may be improved, and bonds between the inorganic particles may be improved.

In an embodiment of the present disclosure, a weight ratio of the second particulate binder polymer to the non-particulate binder precursor in the second slurry composition may be 1:99 to 99:1, 10:90 to 90:10, or 20:80 to 80:20. When the weight ratio of the second particulate binder polymer to the non-particulate binder precursor falls within the aforementioned range, the adhesion strength of the separator in electrolyte-filled state (wet adhesion strength) with respect to electrodes and the adhesion strength of the separator in dry state (dry adhesion strength) with respect to electrodes may be improved.

The subsequent process includes applying the first slurry composition to at least one surface of the porous polymer substrate, following by first drying, to form the inorganic coating layer; and applying the second slurry composition to the inorganic coating layer, followed by second drying, to form the adhesive layer. In this case, the amount of the binder polymer in the adhesive layer may be controlled, and resistance characteristics may be improved.

In another embodiment of the present disclosure, the first slurry composition may be applied to at least one surface of the porous polymer substrate, and the second slurry composition may be applied to the first slurry composition and then dried to form the inorganic coating layer and the adhesive layer at the same time. In this case, there are manufacturing cost and time reduction and process simpliciation advantages.

In an embodiment of the present disclosure, a method for applying the first slurry composition and the second slurry composition may include any common coating method known in the art, for example, dip coating, die coating, roll coating, comma coating, microgravure coating, doctor blade coating, reverse roll coating, Mayer Bar coating, direct metering coating, or a mixture thereof, but is not limited thereto.

In an embodiment of the present disclosure, the time, speed and temperature of the first drying and the second drying may be different depending on the solvent used.

In an embodiment of the present disclosure, the first drying time and the second drying time may each be 30 seconds to 10 hours, and the first drying temperature and the second drying temperature may each be in a range of 30°C to 100°C, or 30°C to 60°C. The drying method is not limited to a particular one and may include any method for removing a cleaning solution from the separator, and for example, an appropriate method may include, for example, any one of convection drying, hot air drying, blow drying and natural drying or a combination thereof.

In an embodiment of the present disclosure, the drying temperature of the first drying step may be performed at lower temperatures than the temperature of the second drying step. For example, the drying temperature in the first drying step may be 30°C to 35°C, and the drying temperature in the second drying step may be 35°C to 40°C. When the temperature of the first drying step and the temperature of the second drying step fall within the aforementioned ranges, the properties of the porous polymer substrate may not degrade.

The subsequent process includes polymerizing the non-particulate binder precursor into the non-particulate binder polymer.

In an embodiment of the present disclosure, the polymerizing step may be performed at temperatures of 45°C to 85°C, 50°C to 80°C, or 55°C to 75°C. The temperature at which the non-particulate binder polymer is polymerized by heat may be different depending on the structure of the non-particulate binder precursor, and the starting temperature for the polymerization of the non-particulate binder precursor may be adjusted by changing the type of the non-particulate binder precursor. When the polymerization initiation temperature of the non-particulate binder precursor falls within the aforementioned temperature range, the non-particulate binder precursor is polymerized at higher temperatures than room temperature, and in the common natural drying step, the non-particulate binder precursor is not polymerized, so the start of the polymerization may be controlled. Additionally, because high temperature is not required for the polymerization of the non-particulate binder precursor, the properties of the porous polymer substrate may not degrade.

In an embodiment of the present disclosure, the second drying step may be performed at lower temperatures than the polymerization temperature of the non-particulate binder precursor. In this case, the starting temperature for the polymerization of the non-particulate binder precursor may be controlled.

Lithium secondary battery

The present disclosure provides a lithium secondary battery.

According to an aspect of the present disclosure, the lithium secondary battery of the present disclosure includes a positive electrode; an negative electrode; an electrolyte solution; and a separator positioned between the positive electrode and the negative electrode, wherein the separator includes the porous polymer substrate; at least one inorganic coating layer present on at least one surface of the porous polymer substrate, the inorganic coating layer including the inorganic particles and the first particulate binder polymer; and at least one adhesive layer present on at least one surface of the inorganic coating layer, the adhesive layer including the second particulate binder polymer and the non-particulate binder polymer, wherein the non-particulate binder polymer is formed by polymerization of the non-particulate binder precursor including the acrylic monomer or oligomer.

In an embodiment of the present disclosure, the acrylic monomer or oligomer may refer to the acrylic monomer or the acrylic oligomer.

In an embodiment of the present disclosure, the positive electrode may be manufactured by coating a positive electrode composition on a positive current collector, the positive electrode composition including a positive electrode active material, a binder, a conductive material and a solvent.

The positive electrode active material may include any positive electrode active material commonly used in the positive electrode of the electrochemical device. For example, the positive electrode active material may include lithium manganese oxide, lithium cobalt oxide, lithium nickel oxide, lithium iron oxide or lithium composite oxide thereof.

In this instance, the positive electrode active material may be included in an amount of 80 wt% to 99 wt%, and preferably 85 wt% to 98 wt% based on the total weight of the solid content of the positive electrode composition. When the amount of the positive electrode active material falls within the aforementioned range, improved capacity characteristics may be provided.

The positive current collector is not limited to a particular one and may include any material having conductivity without causing a chemical change in the corresponding battery. For example, the positive current collector may include stainless steel, aluminum, nickel, titanium, calcined carbon, or aluminum or stainless steel treated with carbon, nickel, titanium or silver on the surface.

The binder is used to assist in holding the active material and the conductive material together and binding to the current collector, and may be generally added in an amount of 1 wt% to 30 wt% based on the total solid weight of the positive electrode composition. Examples of the binder may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylenepropylene-diene terpolymer (EPDM), sulfonated EPDM, styrene-butadiene rubber, fluororubber or a variety of copolymers.

The conductive material may be generally added in an amount of 1 wt% to 30 wt% based on the total solid weight of the positive electrode composition.

The conductive material is not limited to a particular type and may include any material having conductivity without causing a chemical change in the corresponding battery. The conductive material may include, for example, graphite; carbon-based materials such as carbon black, acetylene black, Ketjen black, channel black, furnace black, lamp black or thermal black; conductive fibers such as carbon fibers or metal fibers; fluorocarbon; metal powder such as aluminum powder or nickel powder; conductive whiskers such as zinc oxide whiskers or potassium titanate whiskers; conductive metal oxide such as titanium oxide; or conductive materials such as polyphenylene derivatives. Specific examples of commercially available conductive materials include acetylene black from Chevron Chemical Company or Denka Singapore Private Limited, products from Gulf Oil Company, Ketjenblack, EC series (from Armak Company), Vulcan XC-72 (from Cabot Company) and Super P (from Timcal).

In addition, the positive electrode active material layer may optionally further include a dispersant, if necessary.

The dispersant is not limited to a particular type and may include any dispersant used for the positive electrode, and for example, an aqueous dispersant or an organic dispersant may be selectively used according to necessity. Preferably, the dispersant may include any one of a cellulose-based compound, polyalkylene oxide, polyvinyl alcohol, polyvinyl pyrrolidone, polyvinyl acetal, polyvinyl ether, polyvinyl sulfonic acid, polyvinyl chloride (PVC), polyvinylidene fluoride, chitosans, starch, amylose, polyacrylamide, poly-N-isopropylacrylamide, poly-N,N-dimethylacrylamide, polyethyleneimine, polyoxyethylene, poly(2-methoxyethoxyethylene), poly(acrylamide-co-diallyldimethylammonium chloride), acrylonitrile/butadiene/styrene (ABS) polymer, acrylonitrile/styrene/acrylate (ASA) ester polymer, a mixture of acrylonitrile/styrene/acrylate (ASA) ester polymer and propylene carbonate, a styrene/acrylonitrile (SAN) copolymer, methyl methacrylate/acrylonitrile/butadiene/styrene (MABS) polymer, styrene butadiene rubber, nitrile butadiene rubber and fluororubber, or a mixture of two or more thereof. Hydrogenated nitrile butadiene rubber (H-NBR) may be used. When the positive electrode active material layer further includes the dispersant, dispersion of the components of the positive electrode active material layer, particularly the conductive material may be improved, but is not limited thereto.

In addition, the solvent may include any solvent commonly used in the corresponding technical field, and for example, may include any one of dimethylsulfoxide (DMSO), isopropyl alcohol, N-methylpyrrolidone (NMP), acetone or water, or a mixture of two or more thereof. The solvent is used in a sufficient amount for dissolving or dispersing the positive electrode active material, the conductive material and the binder, taking the coating thickness of the slurry or the production yield into account, and modifying the viscosity to achieve high thickness uniformity in the subsequent coating process to manufacture the positive electrode.

The negative electrode according to the present disclosure may be manufactured by coating a negative electrode composition on a negative current collector, the negative electrode composition including a negative electrode active material, a binder, a conductive material and a solvent. In addition, the negative electrode composition may optionally further include a dispersant, if necessary.

The negative electrode active material may include compounds capable of reversible intercalation and deintercalation of lithium. Preferably, the negative electrode may further include a negative electrode active material exhibiting high-capacity characteristics, for example, a silicon-based negative electrode active material, a carbon-based negative electrode active material, metal composite oxide such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Group 1, 2, and 3 elements in the periodic table, halogen; $0 < x \leq 1$; $1 \leq y \leq 3$; $1 \leq z \leq 8$); lithium metal; lithium alloy; tin-based alloy; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; conductive polymer such as polyacetylene; Li-Co-Ni-based material; titanium oxide; or lithium titanium oxide. The silicon-based negative electrode active material may include at least one selected from the group consisting of Si, SiOx ($0.1 < x < 5$), Si-metal alloy, silicon oxide particle doped or chemically bonded with metal such as Mg (SiOx, $0.1 < x < 5$) and Si-SiOx alloy ($0.1 < x < 5$). The carbon-based negative electrode active material may include at least one selected from the group consisting of natural graphite, artificial graphite, amorphous hard carbon, low-crystalline soft carbon, carbon black, acetylene black, Ketjen black, Super P, graphene and fibrous carbon.

The negative current collector is not limited to a particular type and may include any material having high conductivity without causing a chemical change in the battery, and for example, may include copper, stainless steel, aluminum, nickel, titanium, calcined carbon, copper or stainless steel treated with carbon, nickel, titanium or silver on the surface or aluminum-cadmium alloy. In addition, the negative current collector may be generally 3 $\mu$m to 500 $\mu$m in thickness, and in the same way as the positive current collector, may have a microtextured surface to increase the bond strength of the negative electrode active material. The negative current collector may come in different forms, for example, a film, a sheet, a foil, a net, a porous body, a foam or a non-woven fabric.

The conductive material, the binder, the solvent or the dispersant included in the negative electrode composition are not limited to a particular one and may include those commonly used in the electrode composition, and for example, the conductive material, the binder, the solvent or the dispersant described above in the positive electrode composition may be used.

In addition, the lithium secondary battery may further include an electrolyte solution. The electrolyte solution may include an organic liquid electrolyte solution, an inorganic liquid electrolyte solution, a solid polymer electrolyte solution, a gel polymer electrolyte solution, a solid inorganic electrolyte solution or a molten inorganic electrolyte solution, used to manufacture the lithium secondary battery, but is not limited thereto.

Specifically, the electrolyte solution may include an organic solvent and a lithium salt.

The organic solvent is not limited to a particular type and may include any organic solvent that acts as a medium for the movement of ions involved in the electrochemical reaction of the battery. Specifically, the organic solvent may include ester-based solvents such as methyl acetate, ethyl acetate, $\gamma$-butyrolactone or $\varepsilon$-caprolactone; ether-based solvents such as dibutyl ether or tetrahydrofuran; ketone-based solvents such as cyclohexanone; aromatic hydrocarbon-based solvents such as benzene or fluorobenzene; carbonate-based solvents such as dimethylcarbonate (DMC), diethylcarbonate (DEC), methylethylcarbonate (MEC), ethylmethylcarbonate (EMC), ethylene carbonate (EC) or propylene carbonate (PC); alcohol-based solvents such as ethyl alcohol or isopropyl alcohol; nitriles such as R-CN (R is a C2 to C20 straight-chain, branched-chain or cyclic hydrocarbon, and may comprise an exocyclic double bond or ether bond); amides such as dimethylformamide; dioxolanes such as 1,3-dioxolane; or sulfolanes. Among them, the carbonate-based solvent is preferable, and a mixture of a cyclic carbonate (for example, ethylene carbonate or propylene carbonate) having high ionic conductivity and high dielectric constant that contributes to the improved charge/discharge performance of the battery and a low-viscosity linear carbonate-based compound (for example, ethyl methyl carbonate, dimethyl carbonate or diethyl carbonate) is more preferable. In this case, when the cyclic carbonate and the linear carbonate are mixed at a volume ratio of about 1:1 to about 1:9, the electrolyte solution may have improved performance.

The lithium salt is not limited to a particular type and may include any compound capable of providing lithium ions used in the lithium secondary battery. Specifically, the lithium salt may include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI or $LiB(C_2O_4)_2$. The concentration of the lithium salt may be in a range of 0.1 M to 2.0 M. When the concentration of the lithium salt falls within the aforementioned range, the electrolyte solution may have optimal conductivity and viscosity, resulting in improved performance of the electrolyte solution and effective movement of lithium ions.

In addition to the above-described components of the electrolyte solution, the electrolyte solution may further include, for example, at least one type of additive of a haloalkylene carbonate-based compound such as difluoro ethylene carbonate, pyridine, triethylphosphite, triethanolamine, cyclic ether, ethylene diamine, n-glyme, hexaphosphoric triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in order to improve the life characteristics of the battery, prevent the capacity fading of the battery and improve the discharge capacity of the battery. In this instance, the additive may be included in an amount of 0.1 to 5 parts by weight based on the total weight 100 parts by weight of the electrolyte solution.

In an embodiment of the present disclosure, the adhesion strength of the separator after electrolyte infilling (wet adhesion strength) with respect to electrodes may be 7 gf/20 mm or more, 8 gf/20 mm or more, 9 gf/20 mm or more, or 10 gf/20 mm or more. When the adhesion strength with respect to electrodes meets the aforementioned properties, the high adhesion strength with respect to electrodes may prevent the separator from bending.

The adhesion strength (wet adhesion strength) with respect to electrodes may refer to the adhesion strength between the separator and the positive electrode or the negative electrode after electrolyte infilling. The adhesion strength with respect to electrodes may be measured by tailoring the positive electrode having the positive electrode active material layer on an aluminum current collector and the separator into a width of 20 mm, placing them in a pouch, pouring the electrolyte solution, and applying pressure to the pouch in the conditions of 5 kgf, 70°C, and 4 minutes to prepare a sample for measuring the adhesion strength with respect to electrodes, and performing a 90° peel test at 200 mm/min using a universal testing machine (for example, UTM from Instron). In this instance, the electrolyte solution used may be the above-described electrolyte solution.

In an embodiment of the present disclosure, solubility of the non-particulate binder polymer may be 20% or less, 15% or less, 12% or less, or 10% or less. In addition, the solubility of the non-particulate binder polymer may be 0% or more, 1% or more, or 2% or more. When the solubility of the non-particulate binder polymer falls within the aforementioned range, dissolution stability of the non-particulate binder polymer in the electrolyte solution may be achieved, and the adhesion strength may be maintained after electrolyte injection.

In this instance, the solubility of the non-particulate binder polymer may be calculated by the following Equation 1. Specifically, the solubility of the non-particulate binder polymer or the non-particulate binder precursor may be measured in a manner that the non-particulate binder polymer or the non-particulate binder precursor is dried to prepare a sample of a predetermined weight, for example, 1 g, the sample is placed in a net and dissolved in the electrolyte solution, and after 24 hours, a rinsing process is performed by immersing in another but the same electrolyte solution, followed by drying, and the solubility may refer to a ratio of the weight of the remaining amount to the initial weight. In this instance, the electrolyte solution used may be the above-described electrolyte solution, but the electrolyte solution may be, for example, a solution containing 1M $LiPF_6$ dissolved in a solvent including a 3:7 (volume ratio) mixture of ethylene carbonate (EC) and ethyl methyl carbonate (EMC).

Solubility (%) = {(Measured weight before immersion - Measured weight after immersion) / (Measured weight before immersion )} x 100          Equation 1

In an embodiment of the present disclosure, the swelling ratio of the non-particulate binder polymer may be in a range of 50% to 500%, 55% to 400%, or 60% to 300%. When the swelling ratio of the non-particulate binder polymer falls within the aforementioned range, the wet adhesion strength may be improved, and porosity and resistance characteristics of the separator in the battery may be improved.

In this instance, the swelling ratio of the non-particulate binder polymer may be calculated by the following Equation 2. Specifically, the swelling ratio of the non-particulate binder polymer or the non-particulate binder precursor may be measured in a manner that the weight of the non-particulate binder polymer or the non-particulate binder precursor is measured, the non-particulate binder polymer/the non-particulate binder precursor is dissolved in the electrolyte solution for 24 hours, the wetted non-particulate binder polymer/non-particulate binder precursor is obtained from the electrolyte solution, and its weight is compared with the initial weight. In this instance, the electrolyte solution used may be the same as described above, but the electrolyte solution may be, for example, a solution containing 1M $LiPF_6$ dissolved in a solvent including a 3:7 (volume ratio) mixture of ethylene carbonate (EC) and ethyl methyl carbonate (EMC).

Swelling ratio (%) = {(Measured weight after immersion - Measured weight before immersion) / (Measured weight before immersion)} x 100          Equation 2

In an embodiment of the present disclosure, air permeability of the separator may be in a range of 40 sec/100cc to 80 sec/100cc, 50 sec/100cc to 78 sec/100cc, or 60 sec/100cc to 76 sec/100cc. When the air permeability of the separator falls within the aforementioned range, resistance characteristics of the separator may be improved, and initial discharge capacity and output characteristics of the manufactured lithium secondary battery may be improved.

In this instance, the air permeability of the separator may be, for example, measured using a Gurley air permeability meter in accordance with JIS P-8117, and specifically, may be determined by measuring the time it takes for 100 ml of air to pass through the separator having a diameter of 28.6 mm and an area of 645 mm$^2$. In addition, when the non-particulate binder precursor exists in the electrode assembly before hot pressing, or when the binder polymer exists after hot pressing, the air permeability of the separator may be measured.

Method for manufacturing lithium secondary battery

The present disclosure provides a method for manufacturing a lithium secondary battery.

According to an aspect of the present disclosure, the method for manufacturing the lithium secondary battery of the present disclosure is a method for manufacturing a lithium secondary battery including a first electrode; a second electrode; an electrolyte solution; and a separator positioned between the first electrode and the second electrode, and includes stacking the first electrode, the separator and the second electrode in a sequential order to make a stack; laminating the stack at temperatures of 45°C to 85°C for 1 to 120 seconds to make an electrode assembly; and injecting the electrolyte solution into the electrode assembly, wherein the separator includes the porous polymer substrate; at least one inorganic coating layer present on at least one surface of the porous polymer substrate, the inorganic coating layer including the inorganic particles and the first particulate binder polymer; and at least one adhesive layer present on at least one surface of the inorganic coating layer, the adhesive layer including the second particulate binder polymer and the non-particulate binder polymer, and the non-particulate binder polymer is formed by polymerization of the non-particulate binder precursor including the acrylic monomer or oligomer.

In an embodiment of the present disclosure, the first electrode and the second electrode have different polarities, and for example, the first electrode and the second electrode may be a positive electrode and a negative electrode, or a negative electrode and a positive electrode, respectively. Meanwhile, for details of the positive electrode, the negative electrode and the electrolyte solution, reference is made to the above description.

Hereinafter, each step of the method for manufacturing the lithium secondary battery will be described in detail.

First, the first electrode, the separator and the second electrode are stacked in a sequential order to make the stack.

Subsequently, the stack is laminated at temperatures of 45°C to 85°C or 50°C to 80°C for 1 to 120 seconds, 20 to 100 seconds, or 40 to 80 seconds to make the electrode assembly.

In an embodiment of the present disclosure, the lamination may be performed under pressure conditions of 0.5 MPa to 20 MPa, 1 MPa to 10 MPa, or 2 MPa to 8 MPa.

In this instance, the separator includes the porous polymer substrate; at least one inorganic coating layer present on at least one surface of the porous polymer substrate, the inorganic coating layer including the inorganic particles and the first particulate binder polymer; and at least one adhesive layer present on at least one surface of the inorganic coating layer, the adhesive layer including the second particulate binder polymer and the non-particulate binder polymer, and the non-particulate binder polymer is formed by polymerization of the non-particulate binder precursor including the acrylic monomer or oligomer.

In an embodiment of the present disclosure, the separator may be formed by forming the inorganic coating layer and the adhesive layer on one surface of the porous polymer substrate and drying them as described above, and in this instance, the first drying for drying the first slurry composition to form the inorganic coating layer and the second drying for drying the second slurry composition to form the adhesive layer may be performed as described above.

In an embodiment of the present disclosure, when the second drying is performed at lower temperatures than the polymerization temperature of the non-particulate binder precursor, the non-particulate binder precursor included in the adhesive layer of the separator is not polymerized, and when the lamination is performed at higher temperatures than the polymerization temperature of the non-particulate binder precursor, the non-particulate binder precursor is polymerized during the lamination to form the non-particulate binder polymer.

Hereinafter, the present disclosure will be described in more detail through examples, but the following examples are intended to illustrate the present disclosure, and the scope of the present disclosure is not limited thereto.

Example 1

Aluminum oxide (Al$_2$O$_3$, D$_{50}$: 450 nm, Sumitomo) as inorganic particles and acrylic particulate binder polymer (polyacrylate, Tg: 40°C, D$_{50}$: 400 nm) as a first particulate binder polymer were added to water at room temperature and evenly stirred to prepare a first slurry composition. In this instance, the solid content of the first slurry composition was 35 wt%, and a weight ratio of the inorganic particles : the first particulate binder polymer was 80:20.

Fluorine-based particulate binder polymer (PVDF, Tg: 40°C, D$_{50}$: 400 nm) as a second particulate binder polymer, butylacrylate as a non-particulate binder precursor, and an azobis(2-methylpropionate)-based compound as a thermal polymerization initiator were added to water at room temperature and evenly stirred to prepare a second slurry composition. In this instance, the solid content of the second slurry composition was 10 wt%, and a weight ratio of the second particulate binder polymer : the non-particulate binder precursor was 60:40.

The first slurry composition was applied to two surfaces of a 9 μm-thick polypropylene substrate (air permeability: 59 sec/100cc) using a doctor blade, and dried at the temperature of 40°C for 120 seconds to form an inorganic coating layer with a thickness of 1.5 μm on each of the two surface.

Subsequently, the second slurry composition was applied to two surfaces of the separator having the inorganic coating layer using a doctor blade, and dried at the temperature of 40°C for 60 seconds to form an adhesive layer having a thickness of 0.5 μm on each of the two surfaces, thereby manufacturing a separator in which the non-particulate binder precursor is not polymerized. Subsequently, the separator was stacked between positive and negative electrodes and hot-pressed at the temperature of 70°C for 30 seconds to polymerize an acrylic monomer as the non-particulate binder precursor into a non-particulate binder polymer.

In this instance, the positive electrode and the negative electrode were manufactured as follows:
$LiCoO_2$ as a positive electrode active material, carbon black as a conductive material, and polyvinylidene fluoride (PVdF) as a binder were added to N-methylpyrrolidone (NMP) as a solvent at a weight ratio of 96:2:2 to prepare a positive electrode active material slurry. The positive electrode active material slurry was coated on a sheet-shaped aluminum current collector and dried to prepare a positive electrode with a final positive electrode loading of 3.8 mAh/cm$^2$.

Artificial graphite as a negative electrode active material, carbon black as a conductive material, carboxymethyl cellulose as a dispersant, and a styrene butadiene emulsion as a binder were mixed at a weight ratio of 96:0.5:1.5:2.0, and added to water as a solvent to prepare a negative electrode slurry. The negative electrode slurry was coated on a copper current collector at a loading amount of 4.0 mAh/cm$^2$ and dried to prepare a negative electrode having a negative electrode active material layer.

Example 2

The same process as Example 1 was performed except that β-carboxyethylacrylate was used as the non-particulate binder precursor, instead of butyl acrylate.

Example 3

The same process as Example 1 was performed except that a 1:1 (weight ratio) mixture of butylacrylate and β-carboxyethyl acrylate was used as the non-particulate binder precursor, instead of butyl acrylate.

Comparative Example 1

The same process as Example 1 was performed except that the adhesive layer was not formed.

Comparative Example 2

The same process as Example 1 was performed except that the adhesive layer did not include the non-particulate binder precursor (acrylic monomer) and the thermal polymerization initiator.

Comparative Example 3

The same process as Example 1 was performed except that the adhesive layer did not include the thermal polymerization initiator.

Comparative Example 4

The same process as Example 1 was performed except that the separator without polymerization of the non-particulate binder precursor (acrylic monomer) was stacked between the positive electrode and the negative electrode, and pressed for 30 seconds at the lower temperature (40°C) than the polymerization initiation temperature.

Comparative Example 5

The same process as Example 1 was performed except that the separator including the non-particulate binder polymer instead of the non-particulate binder precursor was used between the positive electrode and the negative electrode.

Aluminum oxide ($Al_2O_3$, $D_{50}$: 450 nm, Sumitomo) as inorganic particles and acrylic particulate binder polymer (polyacrylate, Tg: 40°C, $D_{50}$: 400 nm) as a first particulate binder polymer were added to water at room temperature and evenly stirred to prepare a first slurry composition. In this instance, the solid content of the first slurry composition was 35 wt%, and a weight ratio of the inorganic particles : the first particulate binder polymer was 80:20.

Fluorine-based particulate binder polymer (PVDF, Tg: 40°C, $D_{50}$: 400 nm) as a second particulate binder polymer and polyacrylate as a non-particulate binder polymer were added to water and evenly stirred to prepare a second slurry composition.

In this instance, the solid content of the second slurry composition was 10 wt%, and a weight ratio of the second particulate binder polymer : the non-particulate binder polymer was 60:40.

The first slurry composition was applied to two surfaces of a 9 $\mu$m-thick polypropylene substrate (air permeability: 59 sec/100cc) using a doctor blade, and dried at the temperature of 40°C for 120 seconds to form an inorganic coating layer with a thickness of 1.5 $\mu$m on each of the two surfaces.

Subsequently, the second slurry composition was applied to two surfaces of the separator having the inorganic coating layer using a doctor blade, and dried at the temperature of 40°C for 60 seconds to form an adhesive layer with a thickness of 0.5 $\mu$m on each of the two surfaces.

In this instance, the positive electrode and the negative electrode were manufactured in the same manner as Example 1.

Experimental Example

For each example and each comparative example, solubility, swelling ratio, thickness, air permeability, wet adhesion strength (positive electrode-separator adhesion strength after electrolyte infilling) and resistance were measured and summarized in TABLE 1 below.

TABLE 1

| | Solubility (%) | Swelling ratio (%) | Thickness ($\mu$m) | Adhesive layer Binder loading amount (g/m$^2$ ) | Air permeability (sec/100 cc) | Wet adhesion strength (gf/20mm) | Resistance (ohm) |
|---|---|---|---|---|---|---|---|
| Example 1 | 6 | 135 | 13.0 | 0.7 | 76 | 14 | 0.67 |
| Example 2 | 3 | 64 | 13.1 | 0.7 | 68 | 7 | 0.61 |
| Example 3 | 5 | 90 | 13.0 | 0.6 | 71 | 11 | 0.62 |
| Comparative Example 1 | 0 | 0 | 11.8 | 0 | 56 | 0 | 0.49 |
| Comparative Example 2 | 4 | 30 | 13.0 | 0.6 | 66 | 3 | 0.58 |
| Comparative Example 3 | 33 | 560 | 13.1 | 0.7 | 69 | 4 | 0.64 |
| Comparative Example 4 | 31 | 510 | 13.0 | 0.6 | 73 | 7 | 0.63 |
| Comparative Example 5 | 60 | 160 | 12.9 | 1.5 | 85 | 10 | 0.60 |

The separators of Examples 1 to 3 had low solubility of the non-particulate binder polymer in the electrolyte solution, and the electrolyte swelling ratio was not high. On the other hand, the separators of Examples 1 to 3 had the outstanding air permeability and resistance, and the wet adhesion strength was generally higher than those of Comparative Examples 1 to 4.

In contrast, Comparative Example 1 having no adhesive layer exhibited low wet adhesion strength. Comparative Example 2 including the second particulate binder polymer alone in the adhesive layer exhibited low wet adhesion strength. Comparative Example 3 without thermal polymerization of the non-particulate binder precursor exhibited poor solubility and swelling characteristics, and the wet adhesion strength of the separator was low. Comparative Example 4 without thermal polymerization of the non-particulate binder precursor exhibited poor solubility and swelling characteristics, and the wet adhesion strength was low.

In Comparative Example 5, the non-particulate binder polymer in the adhesive layer of the separator is not the result of polymerization of the precursor, and the non-particulate binder polymer was included during the step of manufacturing the separator, and accordingly, the solubility and swelling ratio of the non-particulate binder polymer were poor, and in particular, it was confirmed that too much of the non-particulate binder polymer was dissolved. In addition, air permeability characteristics of the separator were poor, and it was confirmed that double binder loading in the adhesive layer is needed to ensure similar adhesion strength to examples.

Measurement method

Solubility

The non-particulate binder polymer/the non-particulate binder precursor used in each example and each comparative example was dried to prepare a 1 g sample. The sample was placed in a mesh and dissolved in an electrolyte solution, and after 24 hours, a rinsing process was performed in another but the same electrolyte solution. Subsequently, drying was performed, and the weight of the remaining amount was compared with the initial weight. The solubility was calculated based on the following Equation 1 and summarized in TABLE 1. In this instance, the electrolyte solution used was a solution containing 1M LiPF$_6$ dissolved in a solvent including a 3:7 (volume ratio) mixture of ethylene carbonate (EC) and ethyl methyl carbonate (EMC).

Solubility (%) = {(Measured weight before immersion - Measured weight after immersion) / (Measured weight before immersion)} x 100                    Equation 1

Swelling ratio

The weight of the non-particulate binder polymer/the non-particulate binder precursor used in each example and each comparative example was measured, and the non-particulate binder polymer/the non-particulate binder precursor was dissolved in an electrolyte solution for 24 hours, then the wetted non-particulate binder polymer/non-particulate binder precursor was obtained from the electrolyte solution, and its weight was compared with the initial weight. The swelling ratio was calculated based on the following Equation 2 and summarized in TABLE 1. In this instance, the electrolyte solution used was a solution containing 1M LiPF$_6$ dissolved in a solvent including a 3:7 (volume ratio) mixture of ethylene carbonate (EC) and ethyl methyl carbonate (EMC).

Swelling ratio (%) = {(Measured weight after immersion - Measured weight before immersion) / (Measured weight before immersion)} x 100                    Equation 2

Thickness

The thickness of each separator manufactured in each example and each comparative example was measured using a thickness measuring instrument (Mitutoyo, VL-50S-B) and summarized in TABLE 1.

Air permeability

Each separator of each example and each comparative example before hot-pressing was measured using a Gurley air permeability meter in accordance to JIS P-8117. In this instance, the time it takes for 100 ml of air to pass through the separator having a diameter of 28.6 mm and an area of 645 mm$^2$ was measured.
Wet adhesion strength (positive electrode-separator adhesion strength after electrolyte infilling)
A positive electrode having a positive electrode active material layer on an aluminum current collector and each separator manufactured in each example and each comparative example were tailored into a width of 20 mm and placed in a pouch, and a carbonate-based electrolyte solution was injected into the pouch.
Pressure was applied to the pouch under the conditions of 5 kgf, 70°C, and 4 minutes to prepare a sample for measuring the adhesion strength with respect to electrodes.
To measure the adhesion strength between the positive electrode and the separator, a 90° peel test was performed at 200 mm/min using UTM from Instron.

Resistance

The separators manufactured in each example and each comparative example were positioned between SUS to manufacture coin cells.

An electrolyte solution was injected into the coin cell, the electrolyte solution containing 1M $LiPF_6$ and a 1:2 (volume ratio) mixture of ethylene carbonate and ethyl methyl carbonate.

To measure the resistance of the coin cells, resistance was measured through electrochemical impedance spectroscopic analysis results using VMP3 from BioLogic Science Instrument at 25°C in the conditions of the amplitude of 10 mV and the scan range of 0.1 Hz to 1 MHz, and the results are summarized in TABLE 1 above.

Particle size (Dn)

The particle size (Dn) was measured using the laser diffraction method. Specifically, 0.1 wt% or less of a powder to be measured was dispersed in water, and fed into Microtrac S3500 to measure a difference in diffraction pattern as a function of particle size when particles pass through a laser beam, then a particle size distribution was calculated. $D_{10}$, $D_{50}$ and $D_{90}$ may be measured by calculating particle diameters at 10% point, 50% point and 90% point of cumulative particle size distribution in the measuring instrument, respectively.

Glass transition temperature (Tg)

To measure the glass transition temperature of the binder polymer, after forming a film by drying the binder polymer, the glass transition temperature (Tg) was measured using a differential scanning calorimeter (DSC) (DSC 2920, TA Instrument).

**Claims**

1. A separator for a lithium secondary battery, comprising:

   a porous polymer substrate;
   at least one inorganic coating layer present on at least one surface of the porous polymer substrate, the inorganic coating layer including inorganic particles and a first particulate binder polymer; and
   at least one adhesive layer present on at least one surface of the inorganic coating layer, the adhesive layer including a second particulate binder polymer and a non-particulate binder precursor,
   wherein the non-particulate binder precursor includes an acrylic monomer or oligomer.

2. The separator for the lithium secondary battery according to claim 1,
   wherein the non-particulate binder precursor includes a thermally polymerizable acrylic monomer, a thermally polymerizable acrylic oligomer, a photopolymerizable acrylic monomer, a photopolymerizable acrylic oligomer, or two or more thereof.

3. The separator for the lithium secondary battery according to claim 1,
   wherein the non-particulate binder precursor is polymerized in a temperature condition of 45°C to 85°C to form a non-particulate binder polymer.

4. The separator for the lithium secondary battery according to claim 1,
   wherein the acrylic monomer or oligomer is a monomer including at least one selected from butyl acrylate, β-carboxyethylacrylate, 2-ethylhexylacrylate, 2-methoxyethylacrylate, 4-hydroxybutylacrylate, ethylacrylate, 2-hydroxyethylacrylate, 2-hydroxypropyl acrylate, pentylmethacrylate, 2-hydroxymethylacrylate, ethylmethacrylate, methylmethacrylate, acrylic acid and acrylonitrile, or is an oligomer including at least one repeating unit derived therefrom.

5. The separator for the lithium secondary battery according to claim 1,
   wherein a weight ratio of the second particulate binder polymer to the non-particulate binder precursor is 90:10 to 10:90.

6. The separator for the lithium secondary battery according to claim 1,
   wherein at least a portion of the second particulate binder polymer is connected by the non-particulate binder precursor.

7. The separator for the lithium secondary battery according to claim 1,
   wherein a weight ratio of the first particulate binder polymer to the second particulate binder polymer is 90:10 to 10:90.

8. A method for manufacturing a separator for a lithium secondary battery, the method comprising:

preparing a first slurry composition including inorganic particles, a first particulate binder polymer and a first solvent, and a second slurry composition including a second particulate binder polymer, a non-particulate binder precursor and a second solvent;

applying the first slurry composition to at least one surface of a porous polymer substrate, followed by first drying, to form an inorganic coating layer;

applying the second slurry composition to the inorganic coating layer, followed by second drying, to form an adhesive layer; and

polymerizing the non-particulate binder precursor into a non-particulate binder polymer.

9. The method for manufacturing the separator for the lithium secondary battery according to claim 8, wherein the polymerization is performed at a temperature of 45°C to 85°C.

10. The method for manufacturing the separator for the lithium secondary battery according to claim 8, wherein the second drying to form the adhesive layer is performed at a lower temperature than a temperature at which the non-particulate binder precursor is polymerized into the non-particulate binder polymer.

11. A lithium secondary battery comprising:

a positive electrode; a negative electrode; an electrolyte solution; and a separator positioned between the positive electrode and the negative electrode;

wherein the separator includes:

a porous polymer substrate;

at least one inorganic coating layer present on at least one surface of the porous polymer substrate, the inorganic coating layer including inorganic particles and a first particulate binder polymer; and

at least one adhesive layer present on at least one surface of the inorganic coating layer, the adhesive layer including a second particulate binder polymer and a non-particulate binder polymer,

wherein the non-particulate binder polymer is formed by polymerization of a non-particulate binder precursor including an acrylic monomer or oligomer.

12. The lithium secondary battery according to claim 11, wherein a wet adhesion strength of the separator with respect to the electrodes after injection of the electrolyte solution is 7 gf/20 mm or more.

13. The lithium secondary battery according to claim 11, wherein a solubility of the non-particulate binder polymer is 20% or less, the solubility calculated by the following Equation 1:

Solubility (%) = {(Measured weight before immersion - Measured weight after immersion) / (Measured weight before immersion)} x 100.    Equation 1

14. The lithium secondary battery according to claim 11, wherein a swelling ratio of the non-particulate binder polymer is in a range of 50% to 500%, the swelling ratio calculated by the following Equation 2:

Swelling ratio (%) = {( Measured weight after immersion - Measured weight before immersion) / (Measured weight before immersion)} x 100.    Equation 2

15. The lithium secondary battery according to claim 11, wherein an air permeability of the separator is in a range of 40 sec/100cc to 80 sec/100cc.

16. A method for manufacturing a lithium secondary battery including a first electrode; a second electrode; an electrolyte solution; and a separator positioned between the first electrode and the second electrode, the method comprising:

stacking the first electrode, the separator and the second electrode in a sequential order to make a stack; laminating the stack at a temperature of 45°C to 85°C for 1 to 120 seconds to make an electrode assembly; and injecting the electrolyte solution into the electrode assembly, wherein the separator includes:

a porous polymer substrate;

at least one inorganic coating layer present on at least one surface of the porous polymer substrate, the inorganic coating layer including inorganic particles and a first particulate binder polymer; and

at least one adhesive layer present on at least one surface of the inorganic coating layer, the adhesive layer including a second particulate binder polymer and a non-particulate binder polymer,

wherein the non-particulate binder polymer is formed by polymerization of a non-particulate binder precursor including an acrylic monomer or oligomer.

[FIGURE 1]

TRANSLATION

## INTERNATIONAL SEARCH REPORT

| International application No. |
|---|
| **PCT/KR2025/011849** |

| A. | CLASSIFICATION OF SUBJECT MATTER |
|---|---|

**H01M 50/46**(2021.01)i; **H01M 50/446**(2021.01)i; **H01M 50/457**(2021.01)i; **H01M 50/491**(2021.01)i; **H01M 50/403**(2021.01)i

According to International Patent Classification (IPC) or to both national classification and IPC

| B. | FIELDS SEARCHED |
|---|---|

Minimum documentation searched (classification system followed by classification symbols)

H01M 50/46(2021.01); H01M 10/42(2006.01); H01M 50/409(2021.01); H01M 50/42(2021.01); H01M 50/449(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 기재(substrate), 제1 입자형 바인더 고분자(first particulate binder polymer), 코팅층(coating layer), 제2 입자형 바인더 고분자(second particulate binder polymer), 비입자형 바인더 전구체 (non-particulate binder precursor), 분리막(separator)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2019-0044529 A (LG CHEM, LTD.) 30 April 2019 (2019-04-30)<br>paragraphs [6]-[15], [41]-[162] and claim 1 | 1-16 |
| Y | KR 10-2023-0110027 A (LG ENERGY SOLUTION, LTD.) 21 July 2023 (2023-07-21)<br>paragraphs [10], [61]-[117] and claim 1 | 1-16 |
| A | KR 10-2024-0096389 A (LG ENERGY SOLUTION, LTD.) 26 June 2024 (2024-06-26)<br>claim 9 | 1-16 |
| A | KR 10-2020-0085671 A (LG CHEM, LTD.) 15 July 2020 (2020-07-15)<br>claim 1 | 1-16 |
| A | KR 10-2020-0034470 A (LG CHEM, LTD.) 31 March 2020 (2020-03-31)<br>claims 1-6 | 1-16 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **17 November 2025** | **18 November 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

| International application No. |
|---|
| **PCT/KR2025/011849** |

| Patent document cited in search report | | | Publication date (day/month/year) | Patent family member(s) | | | Publication date (day/month/year) |
|---|---|---|---|---|---|---|---|
| KR | 10-2019-0044529 | A | 30 April 2019 | CN | 110832672 | A | 21 February 2020 |
| | | | | CN | 110832672 | B | 05 May 2023 |
| | | | | CN | 116526071 | A | 01 August 2023 |
| | | | | EP | 3675227 | A1 | 01 July 2020 |
| | | | | EP | 3675227 | A4 | 02 December 2020 |
| | | | | KR | 10-2295078 | B1 | 27 August 2021 |
| | | | | US | 11469476 | B2 | 11 October 2022 |
| | | | | US | 11699831 | B2 | 11 July 2023 |
| | | | | US | 2020-0203690 | A1 | 25 June 2020 |
| | | | | US | 2022-0407184 | A1 | 22 December 2022 |
| | | | | WO | 2019-078650 | A1 | 25 April 2019 |
| KR | 10-2023-0110027 | A | 21 July 2023 | CN | 118511352 | A | 16 August 2024 |
| | | | | EP | 4465405 | A1 | 20 November 2024 |
| | | | | JP | 2025-501640 | A | 22 January 2025 |
| | | | | JP | 7744090 | B2 | 25 September 2025 |
| | | | | WO | 2023-136675 | A1 | 20 July 2023 |
| KR | 10-2024-0096389 | A | 26 June 2024 | CN | 118975036 | A | 15 November 2024 |
| | | | | EP | 4489207 | A1 | 08 January 2025 |
| | | | | JP | 2025-511607 | A | 16 April 2025 |
| | | | | WO | 2024-128853 | A1 | 20 June 2024 |
| KR | 10-2020-0085671 | A | 15 July 2020 | None | | | |
| KR | 10-2020-0034470 | A | 31 March 2020 | CN | 111418088 | A | 14 July 2020 |
| | | | | CN | 118841711 | A | 25 October 2024 |
| | | | | EP | 3734701 | A1 | 04 November 2020 |
| | | | | EP | 3734701 | A4 | 21 April 2021 |
| | | | | KR | 10-2311810 | B1 | 08 October 2021 |
| | | | | US | 11784377 | B2 | 10 October 2023 |
| | | | | US | 2021-0066692 | A1 | 04 March 2021 |
| | | | | WO | 2020-060310 | A1 | 26 March 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240104338